# EUROPÄISCHE PATENTSCHRIFT

(11) **EP 1 995 484 B1**
(45) Veröffentlichungstag und Bekanntmachung des Hinweises auf die Patenterteilung: **21.03.2012**
(21) Anmeldenummer: 08155419.8
(22) Anmeldetag: 30.04.2008
(51) Int. Cl.: F16D 25/0638, F16D 25/12

(54) **Vorrichtung zum Betätigen eines Schaltelementes einer Getriebeeinrichtung**
Method for actuating a switching element for a geared device
Dispositif destiné à actionner un élément de commutation d'un dispositif d'engrenage

(30) Priorität: 23.05.2007 DE 102007023955
(43) Veröffentlichungstag der Anmeldung: 26.11.2008
(73) Patentinhaber: ZF Friedrichshafen AG, 88038 Friedrichshafen (DE)
(72) Erfinder: Bek, Manfred, 88069, Tettnang (DE)

(56) Entgegenhaltungen:
- DE-A1- 3 118 565
- DE-A1- 10 205 411
- US-A- 5 048 656

## Beschreibung

Die Erfindung betrifft eine Vorrichtung zum Betätigen eines Schaltelementes einer Getriebeeinrichtung gemäß der im Oberbegriff des Patentanspruches 1 näher definierten Art.

Zur Reduktion eines Kraftstoffverbrauches als auch von Schadstoffemissionen von mit Verbrennungsmotoren ausgeführten und aus der Praxis bekannten Fahrzeugen wird die Verbrennungsmaschine bei verschiedenen Fahrzeugkonzepten in geeigneten Betriebszuständen eines Fahrzeuges abgeschaltet. Derartige Funktionen werden unter anderem als Motor-Start-Stopp-Funktionen bezeichnet, die in Abhängigkeit von Betriebszuständen verschiedenster Fahrzeugkomponenten aktiviert oder deaktiviert werden und selbst bei kurzen Fahrzeugstillständen ein Abschalten der Verbrennungsmaschine auslösen.

Zur Vermeidung einer Beeinträchtigung eines herkömmlichen Fahrbetriebes durch eine Motor-Start-Stopp-Funktion, ist bei einer fahrerseitig angeforderten Weiterfahrt des Fahrzeuges, insbesondere bei der Einfahrt in stark befahrene und vorfahrtberechtigte Strassen, ein kurzer Startvorgang der Verbrennungsmaschine und ein sofortiger Kraftschlussaufbau in einem Getriebe des Fahrzeuges erforderlich. Bei herkömmlich ausgeführten Automatgetrieben oder automatisierten Schaltgetrieben, welche mit als nasslaufende Lamellenkupplungen und/oder -bremsen ausgeführten Schaltelementen ausgebildet sind, werden die Schaltelemente über eine Getriebepumpe im wesentlichen nur bei laufendem Verbrennungsmotor mit dem erforderlichen Ansteuerdruck versorgt.

Die hydraulisch betätigbaren Schaltelemente weisen üblicherweise jeweils wenigstens ein Kolbenelement auf, mittels welchem jeweils ein Lamellenpaket eines Schaltelementes in Abhängigkeit eines hydraulischen Ansteuerdruckes mehr oder weniger stark verpresst wird und über das jeweils eine vorzugsweise betriebszustandsabhängig anforderte Übertragungsfähigkeit eines Schaltelementes einstellbar ist. Die Kolbenelemente der Schaltelemente sind jeweils entgegen eines in einem Kolbenraum vorherrschenden Betätigungsdruckes in Öffnungsrichtung eines Schaltelementes über eine Federeinrichtung angefedert, wobei an den Kolbenelementen jeweils im Wesentlichen aus den Betätigungsdrücken und der Federeinrichtungen resultierende Gesamtkraftkomponenten angreifen, die die Kolbenelemente in Öffnungsrichtung der Schaltelemente bzw. eine erste Endstellung der Kolbenelemente oder in Schließrichtung der Schaltelemente bzw. eine zweite Endstellung der Kolbenelemente verschieben sowie in vordefinierten Schaltstellungen zwischen den beiden Endstellungen halten.

Fällt der Betätigungsdruck in den Kolbenräumen der Schaltelemente einer Getriebeeinrichtung bei abgeschalteter Verbrennungsmaschine aufgrund der dann ausbleibenden Förderung der Getriebehauptpumpe ab, werden die Kolbenelemente von den jeweils zugeordneten Federeinrichtungen in ihre erste Endstellung verschoben, wobei das in den Kolbenräumen vorhandene Hydraulikfluidvolumen mit zunehmender Zeit im Wesentlichen vollständig ausgeschoben wird.

Bei einer Wiederinbetriebnahme der Verbrennungsmaschine und einem damit einhergehenden Kraftschlussaufbau im Getriebe sind die Kolbenelemente der zuzuschaltenden Schaltelemente in Richtung ihrer zweiten Endstellungen zu verschieben und die Lamellenpakete mit den für den Kraftschluss in der Getriebeeinrichtung entsprechenden Betätigungskräften zu beaufschlagen. Dabei ist zunächst ein sogenanntes Lüftspiel der zuzuschaltenden Schaltelemente zu überwinden und anschließend sind die zuzuschaltenden Schaltelemente durch ein Anheben des Ansteuerdrucks gemäß vorgegebener Zuschaltkennlinien vollständig zu schließen. Der Ausgleich der Lüftspiels der Schaltelemente sowie deren Zuschaltung in den Kraftfluss eines Getriebes wird durch Führen eines bestimmten Hydraulikfluidvolumenstromes in einen Kolbenraum der hydraulisch ansteuerbaren und zuzuschaltenden Schaltelemente erreicht, welcher von der durch die gestartete Verbrennungsmaschine angetriebenen Getriebepumpe bereit zu stellen ist.

Sind vor einer Wiederanfahrt des Fahrzeuges aufgrund der abgeschalteten Verbrennungsmaschine mehrere Schaltelemente einer Getriebeeinrichtung aufgrund der vorbeschriebenen Federeinrichtungen geöffnet und für die Wiederanfahrt des Fahrzeuges zu schließen, verlängert sich die Zeit zwischen dem Beginn des Startvorganges der Verbrennungsmaschine und dem Zeitpunkt, zu welchem der Kraftschluss im Getriebe vollständig hergestellt ist, unter Umständen derart, dass ein mit einer Motor-Start-Stopp-Funktion ausgeführtes Fahrzeug nicht innerhalb von einem Fahrer erwünschten oder erwarteten Zeiträumen in einem angestrebten Umfang betrieben werden kann, da den möglicherweise vollständig entleerten Schaltelementen von der verbrennungsmaschinenseitig angetriebenen Getriebehauptpumpe ein nicht unerhebliches Hydraulikfluidvolumen zuzuführen ist, bis der Kraftschluss in der Getriebeeinrichtung hergestellt ist.

Damit Fahrzeuge mit herkömmlich ausgebildeten Getriebeeinrichtungen mit implementierter Motor-Start-Stopp-Funktion innerhalb der von einem Fahrer erwünschten oder erwarteten Zeiträumen in gewünschter Art und Weise betrieben werden können, ist bei an sich bekannten Fahrzeugen jeweils neben der Getriebehauptpumpe eine weitere, vorzugsweise elektromotorisch betriebene, Hydraulikpumpe vorgesehen, deren Fördervolumen von der Drehzahl der Verbrennungsmaschine unabhängig ist und die bei fehlender Druckversorgung über die Getriebehauptpumpe im Hydrauliksystem der Getriebeeinrichtung zumindest einen Druck erzeugt, mittels dem das federeinrichtungsseitig verursachte Entleeren der jeweils zur Herstellung des Kraftschlusses im Getriebe zuzuschaltenden Schaltelemente verhindert werden kann.

Nachteilhafterweise führt die vorbeschriebene Ausgestaltung einer Getriebeeinrichtung mit einer von der Verbrennungsmaschine antreibbaren Getriebehauptpumpe und einer elektromotorisch antreibbaren Zusatzpumpe im Vergleich zu Getriebeeinrichtungen, die ohne Zusatzpumpe ausgebildet sind, zu einer Verschlechterung des Getriebewirkungsgrades und zu einer Erhöhung der Herstellkosten einer Getriebeeinrichtung. Des Weiteren führt die Stromaufnahme der aktiven Zusatzpumpe zu einer unerwünschten Bordnetzbelastung. Zusätzlich wird durch die Anordnung der vorzugsweise extern des Gehäuses einer Getriebeeinrichtung vorgesehenen Zusatzpumpe ein Bauraumbedarf im Fahrzeug und ein konstruktiver Aufwand aufgrund der hydraulischen Anbindung der Zusatzpumpe an das Hydrauliksystem der Getriebeeinrichtung und der elektrischen Anbindung der Zusatzpumpe an das elektrische Steuer- und Regelsystem eines Antriebsstranges eines Fahrzeuges in unerwünschten Umfang erhöht.

Alternativ hierzu sind aus der Praxis auch so genannte Druckspeicher-Lösungen bekannt, mit deren Hilfe Hydraulikfluid unter Druck gespeichert und dem Hydrauliksystem einer Getriebeeinrichtung zur Ansteuerung der zuzuschaltenden Kupplungen bedarfsgerecht zuführbar ist.

Derartige Druckspeicher-Lösungen weisen jedoch den Nachteil auf, dass das Hydraulikfluid nur mit erheblichem Aufwand mit dem gewünschten Druck speicherbar ist. Zudem wird durch die hauptpumpenseitige Befüllung eines Druckspeichers das Pumpenaufnahmemoment der Getriebehauptpumpe in unerwünschtem Umfang erhöht und ein Gesamtwirkungsgrad einer Getriebeeinrichtung ebenfalls negativ beeinflusst.

Aus der US 5,048,656 ist eine Vorrichtung zur mechanischen Verrastung eines Schaltelementes bekannt. Hierbei ist vorgesehen, dass ein hydraulisch oder elektromagnetisch betätigbarer Sperrstift in eine Umlaufnut des Betätigungskolbens des Schaltelementes formschlüssig eingreifen kann, wobei die Bewegungsrichtung vom Sperrstift und hydraulischen bzw. elektromagnetischen Aktuator beim Ein- und Ausfahren des Sperrstiftes in seine bzw. aus seiner Verrastposition gleichgerichtet ist.

Der vorliegenden Erfindung liegt daher die Aufgabe zugrunde, eine Vorrichtung zum Betätigen eines Schaltelementes einer Getriebeeinrichtung zur Verfügung zu stellen, mittels welcher ein Kraftftuss in einer Getriebeeinrichtung im Vergleich zu aus der Praxis bekannten Getriebeeinrichtungen innerhalb kürzerer Betätigungszeiten bei gleichzeitig gutem Gesamtwirkungsgrad einer Getriebeeinrichtung zur Verfügung stellbar ist.

Erfindungsgemäß wird diese Aufgabe mit einer Vorrichtung mit den Merkmalen des Patentanspruchs 1 gelöst.

Die erfindungsgemäße Vorrichtung zum Betätigen eines Schaltelementes einer Getriebeeinrichtung ist mit einem in einem Kolbenraum zwischen einer ersten und einer zweiten Endstellung verschiebbar angeordneten Kolbenelement ausgebildet. Das Kolbenelement ist in Abhängigkeit eines in dem Kolbenraum vorliegenden hydraulischen Druckes und einer an dem Kolbenelement angreifenden Rückstellkraft einer Rückstelleinrichtung, die der zu dem hydraulischen Druck im Kolbenraum äquivalenten Betätigungskraft entgegen wirkt, hydraulisch betätigbar ausgeführt. Die Übertragungsfähigkeit des Schaltelementes ist durch eine in Richtung der ersten Endstellung des Kolbenelementes wirkende sowie an dem Kolbenelement angreifende Gesamtkraftkomponente reduzierbar und mittels einer in Richtung der zweiten Endstellung des Kolbenelementes wirkenden sowie an dem Kolbenelement angreifenden Gesamtkraftkomponente erhöhbar.

Erfindungsgemäß ist das Kolbenelement mittels einer mechanischen Halteeinrichtung entgegen einer in Richtung der ersten Endstellung des Kolbenelementes wirkenden und am Kolbenelement angreifenden Gesamtkraftkomponente wenigstens in einer vordefinierten Stellung, die von der ersten Endstellung verschieden ist, haltbar.

Damit ist das Kolbenelement bei Angreifen einer in Richtung der ersten Endstellung wirkenden Gesamtkraftkomponente auf einfache und kostengünstige Art und Weise in der vordefinierten Stellung haltbar und das im Kolbenraum befindliche Hydraulikfluid von dem Kolbenelement wird auch bei unterbrochener Druckversorgung des Kolbenraumes nicht vollständig ausgeschoben. Dies führt vorteilhafter Weise dazu, dass das nach dem Start der Brennkraftmaschine bzw. der Verbrennungsmaschine in den Kolbenraum eines Schaltelementes zuzuführende Hydraulikfluidvolumen im Vergleich zu herkömmlichen Schaltelementen verringert ist und zuzuschaltende Schaltelemente von einer von der Verbrennungsmaschine angetriebenen Getriebehauptpumpe ohne eine zusätzliche Getriebepumpe oder einen hydraulischen Druckspeicher ausreichend schnell, d. h. innerhalb von einem Fahrer erwünschter oder erwarteter Zeiträume, befüllbar sind und in den für einen Anfahrvorgang eines Fahrzeuges erforderlichen Betriebszustand überführbar sind.

In kostengünstiger und konstruktiv einfacher Weise ist das Kolbenelement der erfindungsgemäßen Vorrichtung mittels wenigstens einem vorzugsweise mit einem den Kolbenraum begrenzenden Gehäuse zusammenwirkenden Sperrelement in der wenigstens einen vordefinierten Stellung haltbar, welches in einem die Kolbenbewegung sperrenden Zustand mit dem Kolbenelement in vorzugsweise formschlüssiger oder reibschlüssiger Wirkverbindung steht.

Erfindungsgemäß ist vorgesehen, dass das Sperrelement über ein Betätigungselement zumindest aus einem die Kolbenbewegung freigebenden Zustand in seine die Kolbenbewegung sperrenden Zustand überführbar ist, indem dieses Betätigungselement mit wenigstens einer Steuerkurve ausgebildet ist, mit der das Sperrelement derart in Wirkverbindung steht, dass eine Bewegung des Betätigungselementes eine Bewegung des Sperrelementes bewirkt. Dabei lenkt diese Steuerkurve die Bewegungsrichtung des Betätigungselementes in die Bewegungsrichtung des Sperrelementes um.

Das Sperrelement kragt bei einer vorteilhaften Ausgestaltung der erfindungsgemäßen Vorrichtung in seinem die Kolbenbewegung sperrenden Zustand wenigstens bereichsweise in den Kolbenraum vor und sperrt somit die Bewegung des Kolbenelementes in Richtung seiner ersten Endstellung entgegen der in Richtung der ersten Endstellung an dem Kolbenelement angreifenden Gesamtkraftkomponente, die bei abgeschalteter Verbrennungsmaschine im Wesentlichen von der Rückstelleinrichtung erzeugt wird. Hiervon abweichend besteht jedoch auch die Möglichkeit, dass das Kolbenelement bereichsweise aus dem Kolbenraum vorkragt und das Sperrelement in diesem Bereich mit dem Kolbenelement die die Kolbenbewegung sperrende Wirkverbindung eingeht.

Bei einer weiteren vorteilhaften Ausgestaltung der erfindungsgemäßen Vorrichtung ist das Sperrelement bauraumgünstig hydraulisch und/oder mit geringem Dichtaufwand elektromechanisch betätigbar.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zur Verbesserung der Übersichtlichkeit in der Beschreibung der verschiedenen Ausführungsbeispiele für bau- und funktionsgleiche Bauteile dieselben Bezugszeichen verwendet werden.

Es zeigt:
- Fig. 1: eine stark schematisierte Darstellung eines Fahrzeuges, welches mit einer mit einer erfindungsgemäßen Vorrichtung ausgebildeten Getriebeeinrichtung ausgeführt ist;
- Fig. 2: eine stark schematisierte Darstellung eines nicht erfindungsgemäßen Beispieles der erfindungsgemäßen Vorrichtung, bei der ein Sperrelement hydraulisch betätigbar ist;
- Fig. 3: eine Fig. 2 entsprechende Darstellung eines erstes Ausführungsbeispieles der erfindungsgemäßen Vorrichtung, bei der ein Sperrelement elektromechanisch betätigbar ist;
- Fig. 4: eine Fig. 2 entsprechende Darstellung eines zweiten Ausführungsbeispieles der erfindungsgemäßen Vorrichtung mit elektromechanisch betätigbarem Sperrelement; und
- Fig.5: eine vereinfachte Darstellung eines dritten Ausführungsbeispieles der erfindungsgemäßen Vorrichtung mit elektromechanisch betätigbarem Sperrelement.

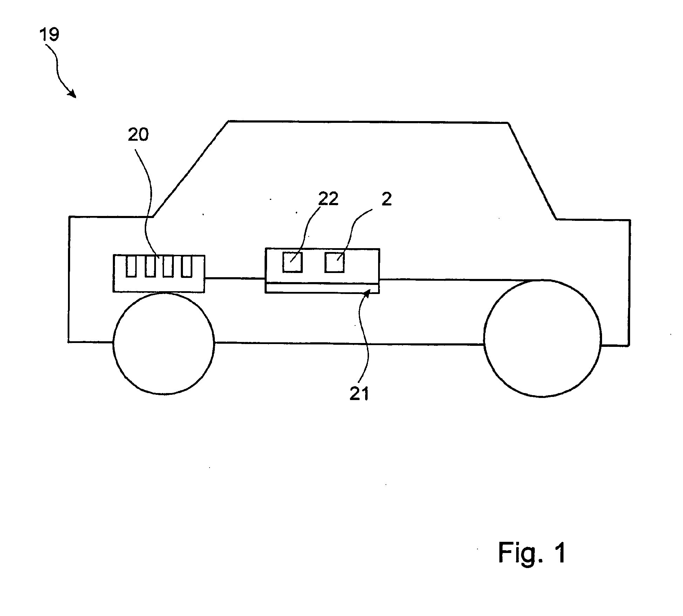

Fig. 1 zeigt eine stark schematisierte Darstellung eines Fahrzeuges 19, welches in an sich bekannter Art und Weise mit einer Verbrennungsmaschine 20 und einer Getriebeeinrichtung 21 ausgeführt ist. Die Getriebeeinrichtung 21 kann grundsätzlich jedes aus der Praxis bekannte automatisierte Handschaltgetriebe oder Automatgetriebe sein, welches mit hydraulisch ansteuerbaren Schaltelementen 2, wie beispielsweise reibschlüssigen Lamellenkupplungen oder Lamellenbremsen, ausgebildet ist. Dabei werden die Schaltelemente 2 der Getriebeeinrichtung 21 von einer von der Verbrennungsmaschine 20 angetriebenen Getriebehauptpumpe 22 betriebszustandsabhängig mit Hydraulikfluid versorgt und bei entsprechender Betätigung von einem geöffneten in einen geschlossenen Zustand überführt.

Für eine Verbrauchsoptimierung und eine Reduzierung von Schadstoffemissionen des Fahrzeuges 19 ist eine sogenannte Motor-Start-Stop-Funktion vorgesehen, mittels welcher die Verbrennungsmaschine 20 in vordefinierten Betriebszuständen des Fahrzeuges 19 abgeschaltet wird und bei Vorliegen eines oder mehrerer vordefinierter Startkriterien wieder gestartet wird, wobei die Getriebehauptpumpe 22 bei abgeschalteter Verbrennungsmaschine 20 kein Hydraulikfluid fördert.

So wird die Verbrennungsmaschine 20 beispielsweise bei aktiviertem Bremslicht und im Fahrzeugstillstand und/oder bei fahrerseitig betätigtem Kupplungspedal selbst während sehr kurzer Stillstandsphasen des Fahrzeuges bei Vorliegen einer Wählhebelposition "D" für Vorwärtsfahrt abgeschaltet und bei Vorliegen verschiedener Startkriterien, wie beispielsweise bei Unterschreiten einer Bremsdruckschwelle, bei einem Lösen der Fahrzeugbremse, bei deaktiviertem Bremslicht, bei einer fahrseitigen Wählhebelbetätigung in eine Position, in der ein Start der Verbrennungsmaschine 20 angefordert wird, bei einer Betätigung des Gaspedals größer oder kleiner als ein Schwellwert, bei einer steuersystemseitigen Ankündigung eines Startvorganges der Verbrennungsmaschine, bei Vorliegen einer Abtriebsdrehzahl größer oder kleiner eines Schwellwertes, bei Vorliegen einer vordefinierten Ladebilanz eines elektrischen Speichers des Fahrzeuges oder in Abhängigkeit von Komfortkriterien, wie eine Anforderung zur Klimatisierung der Fahrgastzelle, wieder gestartet.

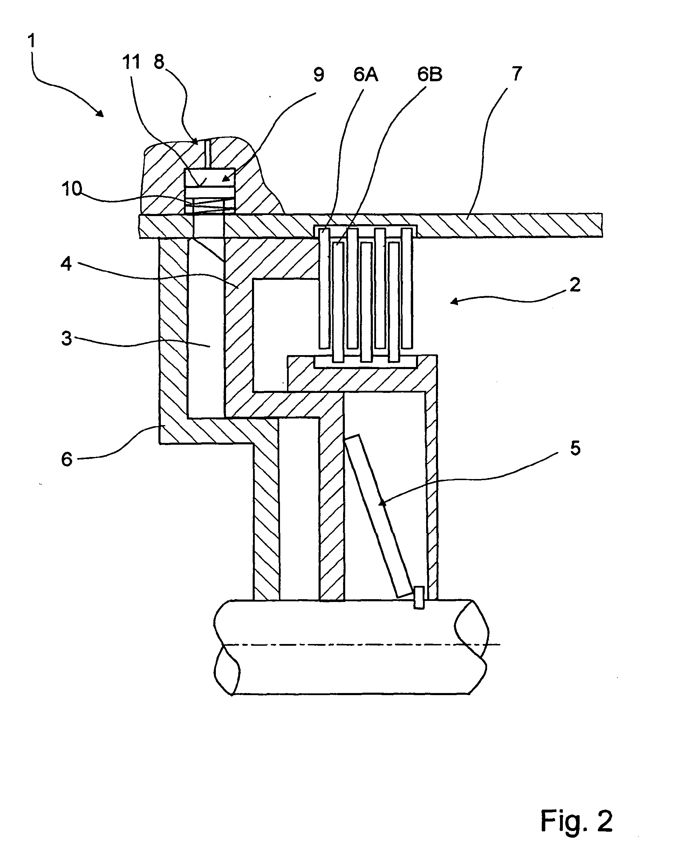

Fig. 2 zeigt ein nicht erfindungsgemäßes Beispiel einer Vorrichtung 1 zum Betätigen des vorliegend als Lamellenbremse ausgeführten Schaltelementes 2, das zur Darstellung einer Anfahrübersetzung der Getriebeeinrichtung 21 vorgesehen ist, mit in einem Kolbenraum 3 zwischen einer ersten und einer zweiten Endstellung verschiebbar angeordneten Kolbenelement 4. Das Kolbenelement 4 ist in Abhängigkeit eines in dem Kolbenraum 3 vorliegenden hydraulischen Druckes und einer an dem Kolbenelement 4 angreifenden Rückstellkraft einer Rückstelleinrichtung 5, die der zu dem hydraulischen Druck im Kolbenraum äquivalenten und am Kolbenelement betriebszustandsabhängig angreifenden Betätigungskraft entgegen wirkt, hydraulisch betätigbar ausgeführt. Die Rückstelleinrichtung 5 ist vorliegend als Federeinrichtung ausgebildet und belastet das Kolbenelement 4 mit seiner Federkraft in Richtung der ersten Endstellung des Kolbenelementes 4.

Die Übertragungsfähigkeit des Schaltelementes 2 ist durch eine in Richtung der ersten Endstellung des Kolbenelementes 4 wirkende und an dem Kolbenelement 4 angreifende Gesamtkraftkomponente reduzierbar. Des Weiteren ist die Übertragungsfähigkeit des Schaltelementes 2 mittels einer in Richtung der zweiten Endstellung des Kolbenelementes 4 wirkenden und an dem Kolbenelement 4 angreifenden Gesamtkraftkomponente erhöhbar. Dabei resultiert die Gesamtkraftkomponente jeweils aus der an dem Kolbenelement 4 angreifenden Federkraft der Rückstelleinrichtung 5 und dem im Kolbenraum 3 vorliegenden Druckwert bzw. der daraus resultierenden Druckkraft.

In seiner ersten Endstellung liegt das Kolbenelement 4 an einem den Kolbenraum 3 gemeinsam mit dem Kolbenelement 4 begrenzenden Gehäuseteil 6 an, wobei die Übertragungsfähigkeit des Schaltelementes 2 dann im Wesentlichen Null ist und über das Schaltelement 2 kein Drehmoment führbar ist. Befindet sich das Kolbenelement 4 hingegen in seiner zweiten Endstellung, stehen Außenlamellen 6A und Innenlamellen 6B derart miteinander in Eingriff, dass das Schaltelement 2 vollständig geschlossen ist und ein am Schaltelement 2 anliegendes Drehmoment vollständig an einem Gehäuse 7 abstützbar ist.

Liegt eine Anforderung vor, dass das vollständig geschlossene Schaltelement 2 zu öffnen ist, wird der Druck im Kolbenraum 3 entsprechend reduziert und das Kolbenelement 4 von der Rückstelleinrichtung 5 aus seiner zweiten Endstellung in Richtung seiner ersten Endstellung verschoben, wobei das Volumen des Kolbenraumes 3 und das darin gespeicherte Hydraulikfluidvolumen zunehmend reduziert wird. Erreicht das Kolbenelement 4 seine erste Endstellung, ist das im Kolbenraum 3 zuvor gespeicherte Hydraulikfluidvolumen vollständig aus dem Kolbenraum 3 ausgeschoben und dem Schaltelement 2 bei einer anschließenden Anforderung zum Schließen des Schaltelementes 2 wieder vollständig zuzuführen.

Das Schaltelement 2 geht bei beispielsweise durch die Motor-Start-Stopp-Funktion abgeschalteter Verbrennungsmaschine 20 des Fahrzeuges 19 von einem geschlossenen Zustand in einen geöffneten Zustand über, da die Druckversorgung des Kolbenraumes 3 von der von der Verbrennungsmaschine 20 angetriebenen Getriebehauptpumpe 22 ausbleibt. Dies resultiert aus der Tatsache, dass der Druck im Kolbenraum 3 bei ausbleibender getriebehauptpumpenseitiger Druckversorgung sofort abfällt und das im Kolbenraum 3 vorhandene Hydraulikfluidvolumen von dem von der Rückstelleinrichtung 5 federbelasteten Kolbenelement 4 nach und nach ausgeschoben wird.

Bei einer Wiederinbetriebnahme der Verbrennungsmaschine 20, die vorzugsweise durch die aktivierte Motor-Start-Stopp-Funktion erfolgen kann, ist das ausgeschobene Hydraulikfluidvolumen, um in der Getriebeeinrichtung bzw. dem Automatgetriebe den für einen Anfahrvorgang erforderlichen Kraftschluss herzustellen, von der Getriebehauptpumpe 22 wieder in den Kolbenraum 3 zuzuführen.

Um das bei abgeschalteter Verbrennungsmaschine 20 von der Rückstelleinrichtung 5 aus dem Kolbenraum 3 ausgeschobene Hydraulikfluidvolumen zu begrenzen, ist das Kolbenelement 4 mittels einer mechanischen Halteeinrichtung 8 entgegen einer in Richtung der ersten Endstellung des Kolbenelementes 4 wirkenden und am Kolbenelement 4 angreifenden Gesamtkraftkomponente in einer vordefinierten Stellung haltbar, die von der ersten Endstellung des Kolbenelements 4 verschieden ist.

Das Hydraulikfluidvolumen, das nach einer Wiederinbetriebnahme der Verbrennungsmaschine 20 zum Schließen des Schaltelementes 2 in den Kolbenraum zuzuführen ist, ist ausgehend von einem Zustand des Schaltelementes 2, zu dem sich das Kolbenelement 4 vollständig in seiner ersten Endstellung befindet ist, wesentlich geringer. Somit ist das Schaltelement 2 im Vergleich zu herkömmlich ausgebildeten Schaltelementen innerhalb kürzerer Betätigungszeiten in seinen geschlossenen Zustand, der für die Herstellung des Kraftschlusses in der Getriebeeinrichtung erforderlich ist, überführbar.

Die Halteeinrichtung 8 ist mit einem mit dem den Kolbenraum 3 begrenzenden Gehäuse 7 zusammenwirkenden Sperrelement 9 in der vordefinierten Stellung haltbar, wobei das Sperrelement 9 vorliegend in seinem die Kolbenbewegung des Kolbenelementes 4 sperrenden und in Fig. 2 dargestellten Zustand wenigstens bereichsweise in den Kolbenraum 3 vorkragt. Das Sperrelement 9 ist als ein gestufter Bolzen ausgeführt, wobei zwischen einem größeren Durchmesserbreich und dem Gehäuse 7 eine Rückstellfedereinrichtung 10 vorgesehen ist, welche das Sperrelement 9 aus seinem die Kolbenbewegung sperrenden Zustand in Richtung eines die Kolbenbewegung freigebenden Zustandes anfedert. Im Bereich seiner der Rückstellfedereinrichtung 10 abgewandten Stirnseite 11 ist das Sperrelement 9 über einen hydraulischen Betätigungsdruck entgegen der Federkraft der Rückstellfedereinrichtung 10 aus seinem die Kolbenbewegung des Kolbenelementes 4 freigebenden Zustand in seinen die Kolbenbewegung sperrenden Zustand überführbar.

In seinem dem Kolbenelement 4 zugewandten Endbereich ist das Sperrelement 9 beispielhaft abgeschrägt ausgebildet, um eine Kolbenbewegung des Kolbenelementes 4 in Richtung seiner zweiten Endstellung nicht zu behindern. Des Weiteren sind das Sperrelement 9 und das Kolbenelement 4 in ihren wechselseitigen Anlagebereichen derart ausgeführt, dass das Sperrelement 9 selbst bei auf die Stirnseite 11 wirkenden Ansteuerdrücken, zu den die Federkraft der Rückstellfedereinrichtung 10 größer ist als die auf die Stirnseite 11 wirkenden Betätigungskräfte, in der in Fig. 1 dargestellten Position verbleibt. Die Anlage zwischen dem Sperrelement 9 und dem Kolbenelement 4 ist durch eine derartige Selbsthaltung gekennzeichnet, dass das Sperrelement 9 selbst bei sehr geringen Betätigungsdrücken, die auch gleich Null sein können, entgegen der Federkraft der Rückstelleinrichtung 5 in der in Fig. 2 dargestellten Position, in der sich das Kolbenelement 4 in seiner die Kolbenbewegung sperrenden Stellung befindet, verbleibt.

Die aus der Federkraft der Rückstelleinrichtung 5, den Oberflächenrauigkeiten und/oder die Neigungen der einander zugewandten Anlageflächen des Sperrelementes 9 und des Kolbenelementes 4 resultierende Selbsthaltung löst sich erst bei Übersteigen eines Grenzwertes des Druckes im Kolbenraum 3, zu dem eine Anpresskraft zwischen dem Kolbenelement 4 und dem Sperrelement 9 kleiner als ein vordefinierter Wert ist, zu dem die Selbsthaltung zwischen dem Kolbenelement 4 und dem Sperrelement 9 wiederum kleiner als die Federkraft der Rückstellfedereinrichtung 10 ist.

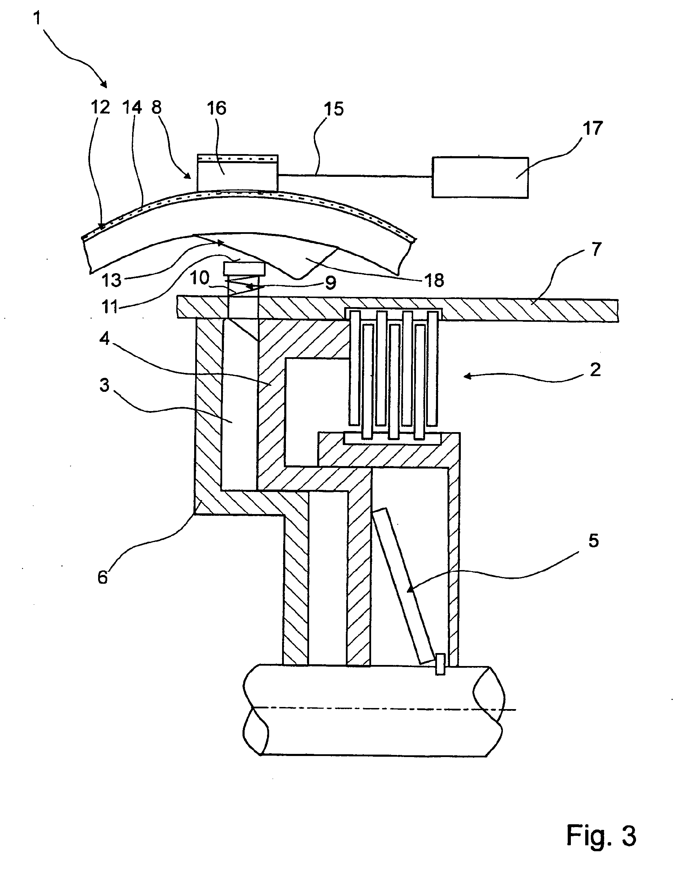

Ein erstes Ausführungsbeispiel der Vorrichtung 1 zeigt Fig. 3, wobei sich die Vorrichtung 1 gemäß Fig. 3 im Wesentlichen lediglich im Bereich der Halteeinrichtung 8 von der Vorrichtung 1 gemäß Fig. 2 unterscheidet, weshalb in der nachfolgenden Beschreibung zu Fig. 3 lediglich auf die Unterschiede näher eingegangen wird und bezüglich der weiteren Funktionsweise auf die vorstehende Beschreibung verwiesen wird.

Das Sperrelement 9 der Vorrichtung 1 gemäß Fig. 3 wird über ein Betätigungselement 12 aus seinem die Kolbenbewegung des Kolbenelementes 4 freigebenden Zustand in seinen die Kolbenbewegung sperrenden Zustand überführt. Das Betätigungselement 12 ist als ein Sperrrad ausgebildet, welches im Bereich seiner dem Sperrelement 9 zugewandten Innenseite mit einer derartigen Steuerkurve 13 ausgebildet ist, dass eine Rotation des Betätigungselementes 12 eine axiale Verstellung des Sperrelementes 9 entgegen oder in Richtung der Federkraft der Rückstellfedereinrichtung 10 bewirkt. Hierfür weist die Steuerkurve 13 des Betätigungselements 12 im Bereich von Steuernocken 18 jeweils in Bezug auf die Rotationsebene des Betätigungselementes 12 schiefe Ebenen auf.

An seiner dem Sperrelement 9 abgewandten Außenseite ist das Betätigungselement 12 mit einer Schneckenverzahnung 14 ausgeführt, mit welcher ein mit einer Motorausgangswelle 15 verbundenes Schneckenrad 16 kämmt. Die Motorausgangswelle 15 ist wiederum über einen Elektromotor 17 rotatorisch antreibbar, wobei die Rotation der Motorausgangswelle 15 eine Drehbewegung des Schneckenrades 16 und damit auch des Betätigungselementes 12 verursacht und das Betätigungselement 12 mit dem Elektromotor 17 über eine Getriebeeinrichtung verbunden ist. Dabei wird das Sperrelement 9 mit zunehmender Drehbewegung des Betätigungselementes 12 von der Steuerkurve 13 in Richtung des Kolbenraumes 3 geschoben. Greift das Sperrelement 9 mit seinem dem Betätigungselement 12 abgewandten Ende in den Kolbenraum 3 ein, ist eine Kolbenbewegung des Kolbenelementes 4 in Richtung der ersten Endstellung des Kolbenelementes 4 gesperrt.

Das Betätigungselement 12 ist vorliegend in nicht näher dargestellter Art und Weise mit mehreren gleichmäßig über den Umfang des Betätigungselementes 12 verteilt angeordneten Steuernocken 18 der Steuerkurve 13 ausgebildet, womit der Elektromotor 17 lediglich in einer Drehrichtung zu betreiben ist, da das Sperrelement 9 periodisch mit den verschiedenen Steuernocken 18 des Betätigungselementes 12 ansteuerbar ist.

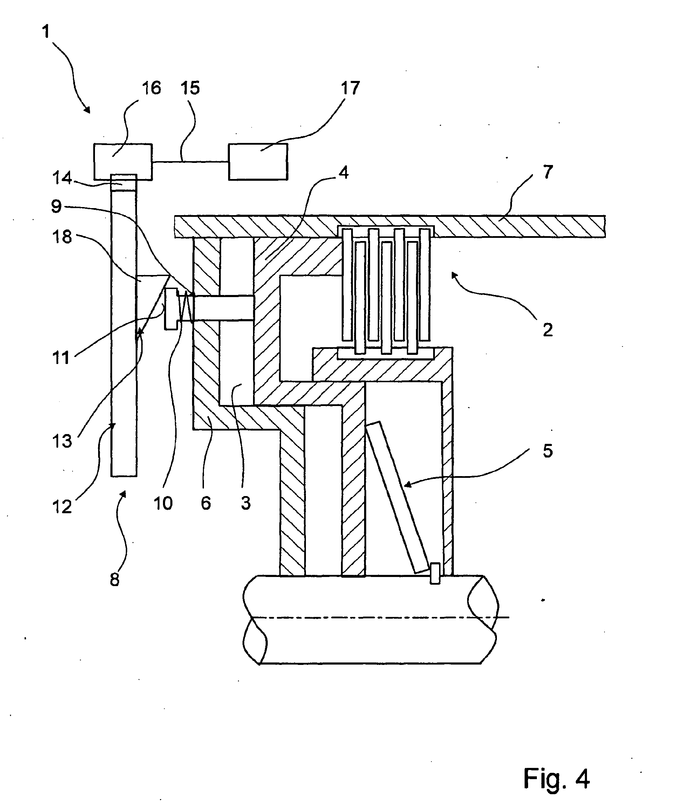

In Fig. 4 ist ein zweites Ausführungsbeispiel der Vorrichtung 1 dargestellt, bei welchem das Sperrelement 9 in axialer Richtung durch das Gehäuseteil 6 hindurch mit dem Kolbenelement 4 in Wirkverbindung bringbar ist, um das Kolbenelement 4 in der vordefinierten Stellung halten zu können. Die Ausführungsform der Vorrichtung 1 gemäß Fig. 4 entspricht im Wesentlichen der Ausgestaltung der Vorrichtung 1 gemäß Fig. 3 und unterscheidet sich lediglich in der Anordnung des Betätigungselementes 12 gegenüber dem Schaltelement und durch die Zuführungsrichtung des Sperrelementes 9 in den Kolbenraum 3. Das Sperrelement 9 wird bei der in Fig. 3 dargestellten Vorrichtung 1 in radialer Richtung ausgehend vom äußeren Umfang des Kolbenraumes 3 in diesen eingeführt.

Das Zahnrad 16, welches mit der Motorausgangswelle 15 des Elektromotors 17 verbunden ist, ist bei der Vorrichtung 1 gemäß Fig. 4 mit einer kostengünstiger herstellbaren Geradverzahnung ausführbar, um die Drehbewegung des Elektromotors 17 auf das Betätigungselement 12 in gewünschtem Umfang übertragen zu können, da die Drehbewegung des Zahnrades 16 nicht wie bei der Vorrichtung 1 gemäß Fig. 3 umzulenken ist.

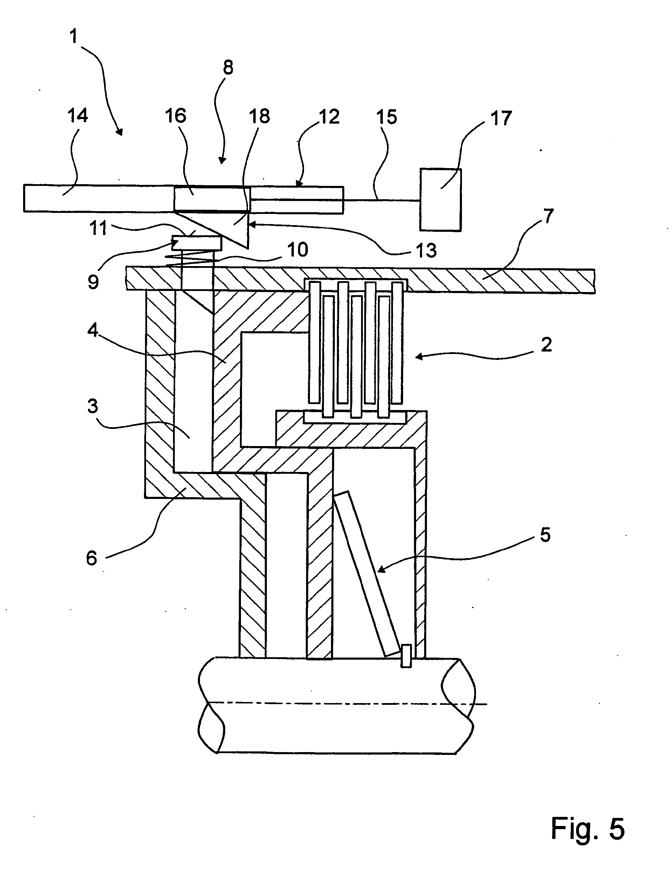

Bei dem in Fig. 5 dargestellten dritten Ausführungsbeispiel der Vorrichtung 1 wird das Sperrelement 9 wie bei der Ausführungsform der Vorrichtung 1 gemäß Fig. 2 und Fig. 3 radial von außen in den Kolbenraum 3 eingeführt, wobei die Betätigung des Sperrelementes 9 wie bei den Ausführungen der Vorrichtung 1 gemäß Fig. 3 und Fig. 4 elektromechanisch erfolgt. Das Betätigungselement 12 der Vorrichtung 1 gemäß Fig. 5 bzw. dessen Rotationsebene ist im Wesentlichen parallel zu der Stirnseite 11 des Sperrelementes 9 und parallel zur Symmetrieachse des Schaltelementes 2 angeordnet.

Abweichend von den in der Zeichnung dargestellten Ausführungsbeispielen der Vorrichtung zum Betätigen eines Schaltelementes ist es bei weiteren Ausführungen der Vorrichtung nach der Erfindung vorgesehen, dass das Kolbenelement wenigstens bereichsweise aus dem Kolbenraum hinausragt und außerhalb des Kolbenraumes mit einem Sperrelement der Halteeinrichtung in formschlüssige oder reibschlüssige Wirkverbindung bringbar ist und in der vordefinierten Stellung von der Halteeinrichtung haltbar ist.

Des Weiteren ist es alternativ oder in Kombination zu einem der vorbeschriebenen Ausführungsbeispiele der Vorrichtung nach der Erfindung bei weiteren Ausgestaltungen der Vorrichtung vorgesehen, dass das Sperrelement der Halteeinrichtung anstelle der Rückstellfedereinrichtung mit Hilfe einer das Betätigungselement aufweisenden Zwangsführung zwischen dem die Kolbenbewegung sperrenden Zustand und dem die Kolbenbewegung freigebenden Zustand verbringbar ist. Das Betätigungselement ist beispielsweise mit einer Steuernut ausgeführt, mit welcher das Sperrelement derart in Wirkverbindung steht, dass eine Bewegung des Betätigungselementes eine Bewegung des Sperrelementes in Richtung seiner die Kolbenbewegung sperrende Stellung oder in Richtung seiner die Kolbenbewegung freigebende Stellung auslöst.

In Abhängigkeit des jeweils vorliegenden Anwendungsfalles befindet sich das Schaltelement 2 der Getriebeeinrichtung 21 bei in der vordefinierten Stellung des Kolbenelementes gehaltenem Kolbenelement in einem Betriebszustand, zu dem über das Schaltelement 2 wenigstens ein Teil des anliegenden Drehmomentes führbar ist oder zu dem das Schaltelement 2 vollständig geöffnet ist. Die Übertragungsfähigkeit des Schaltelementes 2 in der vordefinierten Stellung ist bei den Ausführungsbeispielen der Vorrichtung 1 gemäß Fig. 2, 3 und 5 von der Anordnung des Sperrelementes 9 in dem Gehäuse 7 abhängig und nicht variierbar. Dagegen ist die Übertragungsfähigkeit des Schaltelementes 2 bei der Ausführung der Vorrichtung 1 gemäß Fig. 4 davon abhängig, wie weit das Sperrelement 2, welches im Bereich seines dem Kolbenelement 4 zugewandten Endes ohne Abflachung ausgebildet ist, in den Kolbenraum 3 eingeschoben wird, und daher auch in Abhängigkeit der Einschieblänge des Sperrelementes 9 in den Kolbenraum 3 veränderbar.

Wird der Druckabfall innerhalb des Kolbenraumes 3 durch einen Systemfehler verursacht ist und ist das defekte Fahrzeug in eine Werkstatt abzuschleppen, ist die Wirkposition des Sperrelementes 9 vor dem Abschleppvorgang nicht erst durch eine geeignete Entriegelungseinrichtung aufzuheben, wenn die Übertragungsfähigkeit des Schaltelementes 2 bei Vorliegen des Kolbenelementes 4 in seiner vordefinierten Position im Wesentlichen Null ist. Andererseits ist dann für die Herstellung des Kraftflusses in der Getriebeeinrichtung ein größeres Hydraulikfluidvolumen in den Kolbenraum 3 des Schaltelementes zuzuführen, bis das Schaltelement mit der für einen Anfahrvorgang erforderlichen Übertragungsfähigkeit vorliegt.

Grundsätzlich ist die Vorrichtung nach der Erfindung auch mit mehreren als einem Sperrelement zum Halten des Kolbenelementes eines als Lamellenbremse oder Lamellenkupplung ausgeführten Schaltelementes ausbildbar. Dabei wird bei der Anordnung mehrerer Sperrelemente auf einfache Art und Weise ein Verkippen des Kolbenelementes vermieden und ein Verklemmen des Kolbenelementes mit dem den Zylinder bildenden Bauteilen auf einfache Art und Weise umgangen.

### Bezugszeichen

- 1: Vorrichtung
- 2: Schaltelement
- 3: Kolbenraum
- 4: Kolbenelement
- 5: Rückstelleinrichtung
- 6: Gehäuseteil
- 6A: Außenlamellen
- 6B: Innenlamellen
- 7: Gehäuse
- 8: Halteeinichtung
- 9: Sperrelement
- 10: Rückstellfedereinrichtung
- 11: Stirnseite
- 12: Betätigungselement
- 13: Steuerkurve
- 14: Schneckenverzahnung
- 15: Motorausgangswelle
- 16: Schneckenrad
- 17: Elektromotor
- 18: Steuernocken
- 19: Fahrzeug
- 20: Verbrennungsmaschine
- 21: Getriebeeinrichtung
- 22: Getriebehauptpumpe

## Patentansprüche

1. Vorrichtung (1) zum Betätigen eines Schaltelementes (2) einer Getriebeeinrichtung (21), mit in einem Kolbenraum (3) zwischen einer ersten und einer zweiten Endstellung verschiebbar angeordneten Kolbenelement (4), welches in Abhängigkeit eines in dem Kolbenraum (3) vorliegenden hydraulischen Druckes und einer an dem Kolbenelement (3) angreifenden Rückstellkraft einer Rückstelleinrichtung (5), die der zu dem hydraulischen Druck im Kolbenraum (3) äquivalenten Betätigungskraft entgegenwirkt, hydraulisch betätigbar ausgeführt ist, wobei die Übertragungsfähigkeit des Schaltelementes (2) durch eine in Richtung der ersten Endstellung des Kolbenelementes (4) wirkende sowie an dem Kolbenelement (3) angreifende Gesamtkraftkomponente reduzierbar und mittels einer in Richtung der zweiten Endstellung des Kolbenelementes (3) wirkenden sowie an dem Kolbenelement (3) angreifenden Gesamtkraftkomponente erhöhbar ist, wobei das Kolbenelement (3) mittels einer mechanischen Halteeinrichtung (8) entgegen einer in Richtung der ersten Endstellung des Kolbenelementes (3) wirkenden und am Kolbenelement (3) angreifenden Gesamtkraftkomponente wenigstens in einer vordefinierten Stellung, die von der ersten Endstellung verschieden ist, haltbar ist, wobei das Kolbenelement (3) mittels wenigstens einem vorzugsweise mit einem den Kolbenraum (3) begrenzenden Gehäuse (7) zusammenwirkenden Sperrelement (9) in der wenigstens einen vordefinierten Stellung haltbar ist, welches in seinem die Kolbenbewegung sperrenden Zustand mit dem Kolbenelement (3) in Wirkverbindung steht und wobei das Sperrelement (9) über ein Betätigungselement (12) zumindest aus einem die Kolbenbewegung freigebenden Zustand in seinen die Kolbenbewegung sperrenden Zustand überführbar ist, **dadurch gekennzeichnet, dass** das Betätigungselement (12) mit wenigstens einer Steuerkurve (13) ausgebildet ist, mit der das Sperrelement (9) derart in Wirkverbindung steht, dass eine Bewegung des Betätigungselementes (12) eine Bewegung des Sperrelementes (9) bewirkt, diese Steuerkurve (13) beim Betätigen des Sperrelementes (9) die Bewegungsrichtung des Betätigungselementes (12) in die Bewegungsrichtung des Sperrelementes (9) umlenkt.

2. Vorrichtung nach Anspruch 1, **dadurch gekennzeichnet, dass** die Bewegungsrichtung des Betätigungselementes (1) beim Betätigen des Sperrelementes (9) im wesentlichen senkrecht zueinander sind.

3. Vorrichtung nach Anspruch 1, **dadurch gekennzeichnet, dass** die Steuerkurve (13) des Betätigungselementes (12) eine rotatorische Bewegung des Betätigungselementes (12) beim Betätigen des Sperrelementes (9) in eine lineare Bewegung des Sperrelementes (9) umlenkt.

4. Vorrichtung nach Anspruch 1, 2 oder 3, **dadurch gekennzeichnet, dass** das Sperrelement (9) in seinem die Bewegung des Kolbenelementes (3) in Richtung seiner ersten Endstellung sperrenden Zustand wenigstens bereichsweise in den Kolbenraum (3) vorkragt.

5. Vorrichtung nach einem der Ansprüche 1 bis 4, **dadurch gekennzeichnet, dass** das Sperrelement (9) hydraulisch und/oder elektromechanisch betätigbar ist.

6. Vorrichtung nach einem der Ansprüche 1 bis 5, **dadurch gekennzeichnet, dass** das Sperrelement (9) über das Betätigungselement (12) auch aus seinem die Kolbenbewegung sperrenden Zustand in seinen die Kolbenbewegung freigebenden Zustand überführbar ist.

7. Vorrichtung nach Anspruch 6, **dadurch gekennzeichnet, dass** das Betätigungselement mit wenigstens einer Steuernut ausgeführt ist, in welche das Sperrelement derart eingreift, das eine Bewegung des Betätigungselementes eine Bewegung des Sperrelementes bewirkt.

8. Vorrichtung nach einem der Ansprüche 1 bis 7, **dadurch gekennzeichnet, dass** das Sperrelement (9) mittels einer Rückstellfedereinrichtung (10) aus dem die Kolbenbewegung sperrenden Zustand in seinen die Kolbenbewegung freigebenden Zustand überführbar ist.

9. Vorrichtung nach einem der Ansprüche 1 bis 8, **dadurch gekennzeichnet, dass** das Betätigungselement (12) über eine Getriebeeinrichtung (14, 16) mit einem Elektromotor (17) verbunden und von diesem antreibbar ist.

10. Vorrichtung nach einem der Ansprüche 1 bis 9, **dadurch gekennzeichnet, dass** die Übertragungsfähigkeit des Schaltelementes (2) bei Vorliegen des Kolbenelementes (3) in der vordefinierten Stellung im Wesentlichen Null ist.

11. Vorrichtung nach einem der Ansprüche 1 bis 9, **dadurch gekennzeichnet, dass** bei Vorliegen des Kolbenelementes (3) in der vordefinierten Stellung wenigstens ein Teil eines anliegenden Drehmomentes über das Schaltelement (2) führbar ist.

12. Vorrichtung nach einem der Ansprüche 1 bis 11, **dadurch gekennzeichnet, dass** das Schaltelement (2) ein reibschlüssiges Schaltelement, vorzugsweise eine Lamellenbremse oder eine Lamellenkupplung ist.

## Claims

1. Apparatus (1) for actuating a switching element (2) of a gear device (21), having a piston element (4) which is arranged in a piston space (3) such that it can be displaced between a first and a second end position, which piston element (4) is configured such that it can be actuated hydraulically as a function of a hydraulic pressure which prevails in the piston space (3) and of a restoring force of a restoring device (5), which restoring force acts on the piston element (3) and counteracts the actuating force which is equivalent to the hydraulic pressure in the piston space (3), it being possible for the transmission capability of the switching element (2) to be reduced by an overall force component which acts in the direction of the first end position of the piston element (4) and on the piston element (4), and for it to be increased by means of an overall force component which acts in the direction of the second end position of the piston element (4) and on the piston element (4), it being possible for the piston element (4) to be held by means of a mechanical holding device (8) at least in one predefined position which is different from the first end position, counter to an overall force component which acts in the direction of the first end position of the piston element (4) and on the piston element (4), it being possible for the piston element (4) to be held in the at least one predefined position by means of at least one locking element (9) which preferably interacts with a housing (7) which delimits the piston space (3), which locking element (9) is operatively connected to the piston element (4) in its state which locks the piston movement, and it being possible for the locking element (9) to be transferred via an actuating element (12) at least from a state which releases the piston movement into its state which locks the piston movement, **characterized in that** the actuating element (12) is configured with at least one control cam (13), with which the locking element (9) is operatively connected in such a way that a movement of the actuating element (12) brings about a movement of the locking element (9), the said control cam (13) deflecting the movement direction of the actuating element (12) into the movement direction of the locking element (9) upon actuation of the locking element (9).

2. Apparatus according to Claim 1, **characterized in that**, upon actuation of the locking element (9), the movement direction of the actuating element (12) is substantially perpendicular with respect to it.

3. Apparatus according to Claim 1, **characterized in that**, upon actuation of the locking element (9), the control cam (13) of the actuating element (12) deflects a rotational movement of the actuating element (12) into a linear movement of the locking element (9).

4. Apparatus according to Claim 1, 2 or 3, **characterized in that**, in its state which locks the movement of the piston element (4) in the direction of its first end position, the locking element (9) projects into the piston space (3) at least in regions.

5. Apparatus according to one of Claims 1 to 4, **characterized in that** the locking element (9) can be actuated hydraulically and/or electromechanically.

6. Apparatus according to one of Claims 1 to 5, **characterized in that** the locking element (9) can also be transferred via the actuating element (12) from its state which locks the piston movement into its state which releases the piston movement.

7. Apparatus according to Claim 6, **characterized in that** the actuating element is configured with at least one control groove, into which the locking element engages in such a way that a movement of the actuating element brings about a movement of the locking element.

8. Apparatus according to one of Claims 1 to 7, **characterized in that** the locking element (9) can be transferred by means of a restoring spring device (10) from the state which locks the piston movement into its state which releases the piston movement.

9. Apparatus according to one of Claims 1 to 8, **characterized in that** the actuating element (12) is connected via a gear device (14, 16) to an electric motor (17) and can be driven by the latter.

10. Apparatus according to one of Claims 1 to 9, **characterized in that** the transmission capability of the switching element (2) is substantially zero when the piston element (4) is present in the predefined position.

11. Apparatus according to one of Claims 1 to 9, **characterized in that**, when the piston element (4) is present in the predefined position, at least part of a prevailing torque can be conducted via the switching element (2).

12. Apparatus according to one of Claims 1 to 11, **characterized in that** the switching element (2) is a frictional switching element, preferably a multiple disc brake or a multiple disc clutch.

## Revendications

1. Dispositif (1) destiné à actionner un élément de commutation (2) d'un dispositif d'engrenage (21), comprenant un élément de piston (4) disposé de manière à pouvoir coulisser dans une chambre de piston (3) entre une première et une deuxième position d'extrémité, lequel est réalisé de manière à pouvoir être commandé hydrauliquement en fonction d'une pression hydraulique s'appliquant dans la chambre de piston (3) et d'une force de rappel d'un dispositif de rappel (5) s'appliquant à l'élément de piston (4), lequel dispositif de rappel agit à l'encontre de la force de commande équivalente à la pression hydraulique dans la chambre de piston (3), la capacité de transfert de l'élément de commutation (2) pouvant être réduite par une composante de force totale agissant dans la direction de la première position d'extrémité de l'élément de piston (4) et s'exerçant sur l'élément de piston (4) et pouvant être accrue au moyen d'une composante de force totale agissant dans la direction de la deuxième position d'extrémité de l'élément de piston (4) et s'exerçant sur l'élément de piston (4), l'élément de piston (4) pouvant être maintenu dans l'au moins une position prédéfinie au moyen d'au moins un élément de blocage (9) coopérant de préférence avec un boîtier (7) limitant la chambre de piston (3), lequel élément de blocage dans son état bloquant le mouvement du piston, étant en liaison fonctionnelle avec l'élément de piston (4), et l'élément de blocage (9) pouvant être transféré par le biais d'un élément d'actionnement (12) au moins d'un état libérant le mouvement du piston dans son état bloquant le mouvement du piston, **caractérisé en ce que** l'élément d'actionnement (12) est réalisé avec au moins une came de commande (13) avec laquelle l'élément de blocage (9) est en liaison fonctionnelle de telle sorte qu'un mouvement de l'élément d'actionnement (12) provoque un mouvement de l'élément de blocage (9), cette came de commande (13), lors de l'actionnement de l'élément de blocage (9), déviant la direction de mouvement de l'élément d'actionnement (12) dans la direction de mouvement de l'élément de blocage (9).

2. Dispositif selon la revendication 1, **caractérisé en ce que** la direction de mouvement de l'élément d'actionnement (12) lors de l'actionnement de l'élément de blocage (9) est sensiblement perpendiculaire à la direction de mouvement de celui-ci.

3. Dispositif selon la revendication 1, **caractérisé en ce que** la came de commande (13) de l'élément d'actionnement (12) dévie un mouvement de rotation de l'élément d'actionnement (12) lors de l'actionnement de l'élément de blocage (9) en un mouvement linéaire de l'élément de blocage (9).

4. Dispositif selon la revendication 1, 2 ou 3, **caractérisé en ce que** l'élément de blocage (9) dans son état bloquant le mouvement de l'élément de piston (4) dans la direction de sa première position d'extrémité fait saillie au moins en partie dans la chambre de piston (3).

5. Dispositif selon l'une quelconque des revendications 1 à 4, **caractérisé en ce que** l'élément de blocage (9) peut être actionné hydrauliquement et/ou électromécaniquement.

6. Dispositif selon l'une quelconque des revendications 1 à 5, **caractérisé en ce que** l'élément de blocage (9) peut être transféré par le biais de l'élément d'actionnement (12) également de son état bloquant le mouvement du piston dans son état libérant le mouvement du piston.

7. Dispositif selon la revendication 6, **caractérisé en ce que** l'élément d'actionnement est réalisé avec au moins une rainure de commande, dans laquelle s'engage l'élément de blocage de telle sorte qu'un mouvement de l'élément d'actionnement provoque un mouvement de l'élément de blocage.

8. Dispositif selon l'une quelconque des revendications 1 à 7, **caractérisé en ce que** l'élément de blocage (9) peut être transféré au moyen d'un dispositif de ressort de rappel (10) de l'état bloquant le mouvement du piston dans son état libérant le mouvement du piston.

9. Dispositif selon l'une quelconque des revendications 1 à 8, **caractérisé en ce que** l'élément d'actionnement (12) est connecté par le biais d'un dispositif d'engrenage (14, 16) à un moteur électrique (17) et peut être entraîné par ce dernier.

10. Dispositif selon l'une quelconque des revendications 1 à 9, **caractérisé en ce que** la capacité de transfert de l'élément de commutation (2) est sensiblement nulle lorsque l'élément de piston (4) se trouve dans la position prédéfinie.

11. Dispositif selon l'une quelconque des revendications 1 à 9, **caractérisé en ce qu'**au moins une partie d'un couple appliqué peut être guidée par le biais de l'élément de commutation (2) lorsque l'élément de piston (4) se trouve dans la position définie.

12. Dispositif selon l'une quelconque des revendications 1 à 11, **caractérisé en ce que** l'élément de commutation (2) est un élément de commutation à engagement par friction, de préférence un frein à disques ou un embrayage à disques.
